# EUROPEAN PATENT APPLICATION

(11) **EP 3 897 033 A1**
(43) Date of publication of application: **20.10.2021**
(21) Application number: 18942928.5
(22) Date of filing: 13.12.2018
(51) Int. Cl.: H04W 28/16, H04W 28/18

(54) **USER TERMINAL AND COMMUNICATION CONTROL METHOD**

(71) Applicant: NTT DOCOMO, INC., Chiyoda-ku Tokyo 100-6150 (JP)
(72) Inventor: HARADA, Hiroki, Tokyo 100-6150 (JP); NAGATA, Satoshi, Tokyo 100-6150 (JP)
(74) Representative: Hoffmann Eitle
(86) International application number: PCT/JP2018/045981
(87) International publication number: WO 2020/121501

(57) **Abstract**

This user terminal has: a reception unit that receives information indicating whether or not to allow the determination of a parameter related to wireless communication; and a control unit that controls, on the basis of the information, the determination of a parameter to be used for wireless communication.

## Description

### Technical Field

The present disclosure relates to a user terminal and a communication control method.

### Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like (see, e.g., Non-Patent Literature (hereinafter referred to as "NPL") 1).

### Citation List

### Non-Patent Literature

NPL 1
3GPP TS 36.300 v15.3.0, "Evolved Universal Terrestrial Radio Access (E-UTRA) and Evolved Universal Terrestrial Radio Access Network (E-UTRAN); Overall description; Stage 2 (Release 15)," September 2018

### Summary of Invention

### Technical Problem

NR is more flexible than LTE and has more parameters used for communication between a user terminal and a network (e.g., base station). Accordingly, there is scope for further study on determination or optimization of the parameters.

An objective of the present disclosure is to improve the efficiency of communication operation by improving the efficiency of the determination of the parameters for radio communication.

### Solution to Problem

A user terminal according to one aspect of the present disclosure includes: a reception section that receives information indicating whether or not determination of a parameter relevant to radio communication is permitted; and a control section that controls, based on the information, determination of a parameter used for the radio communication.

A communication control method according to one aspect of the present disclosure includes: receiving information indicating whether or not determination of a parameter relevant to radio communication is permitted; and controlling, based on the information, determination of a parameter used for the radio communication.

### Advantageous Effects of Invention

According to the present disclosure, it is possible to improve the efficiency of communication operation by improving the efficiency of determination of parameters for radio communication.

### Brief Description of Drawings

FIG. 1 is an explanatory view for explaining a concept for optimization of parameters using artificial intelligence (AI);
FIG. 2 is an explanatory view for explaining an example of classification of AI-based operations of a user terminal;
FIG. 3 illustrates an exemplary configuration of a radio communication system according to one embodiment;
FIG. 4 illustrates an example of a block configuration of the user terminal;
FIG. 5 illustrates an example of a block configuration of a radio base station; and
FIG. 6 illustrates an example of a hardware configuration of the user terminal and the radio base station according to an embodiment.

### Description of Embodiments

Hereinafter, an embodiment will be described with reference to the accompanying drawings. The below-described embodiment will be described in relation to application of an AI technology to determination of parameters used for radio communication in a radio communication system such as NR that has higher flexibility and has a larger number of parameters than LTE.

For example, applying or utilizing the AI technology to or in a Radio Access Network (RAN) makes it possible to make more efficient or optimize the parameters for the radio communication. Accordingly, for example, it is possible to make more efficient or optimize communication operation in the RAN, to improve the radio communication performance. For example, it is possible to expect a potential reduction in one or both of the number of signaling messages and the number of feedbacks in the RAN, or a potential improvement in mobility performance, such as ease of connection and connection maintainability for a user terminal connecting to a base station.

Note that, targets for application of the AI technology in the RAN may include one or both of Layer 1 (LI) and Layer 2 (L2). Application or utilization of the AI technology in the RAN may be referred to as "AI for RAN" for convenience. The notion of "AI" may include one or both of Machine Learning (ML) and Deep Learning.

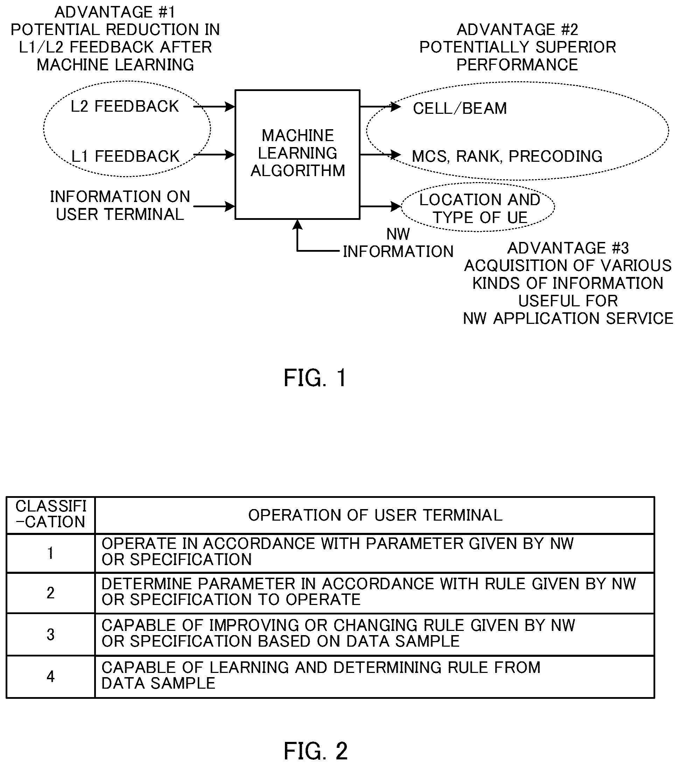

FIG. 1 is an explanatory view for explaining the concept of optimization of parameters using AI. FIG. 1 conceptually illustrates learning of feedback information, for example, in one or both of L1 and L2 using an ML algorithm as an example of AI.

The feedback information is, for example, information fed back by the user terminal to the base station, and may exemplarily be a report to the base station in one or both of the processes of Radio Resource Management (RRM) and Radio Link Monitoring (RLM).

Learning the feedback information makes it possible, for example, to reduce the number of signaling messages from the base station to the user terminal, and also to reduce the number of feedbacks from the user terminal to the base station.

In addition, through learning of the feedback information, it becomes possible, for example, to make more efficient or optimize parameters relevant to cell selection and/or beam selection of the user terminal. Further, through learning of the feedback information, it becomes possible, for example, to make more efficient or optimize parameters relevant to a Modulation and Coding Scheme (MCS) or parameters relevant to ranks or precoding in Multiple-Input and Multiple-Output (MIMO). By such optimization of parameters, it is possible to expect, for example, to improve the radio communication performance.

Targets for learning using the ML algorithm may include one or both of information on the user terminal and network (NW) information. The information on the user terminal may include, for example, at least one of information obtained by GPS or a sensor, capability information that varies depending on the model of the terminal, and information based on the usage history (various logs) of the user terminal. The NW information may include, for example, at least one of two-dimensional or three-dimensional map information, network communication data amount control, communication rate control, and radio power amount control.

The ML algorithm may learn one or both of the information on the user terminal (UE) and the NW information as described above, and may, for example, provide the NW with a learning result (e.g., information on the location and type (mobility type) of the UE). The NW is capable, for example, of obtaining various learning results about the UE as information useful for application services provided for the user terminal.

In future radio communication systems, it is assumed that the user terminal is capable of autonomously determining the parameters relevant to the radio communication using the AI. Note that, examples of the parameters autonomously determined by the user terminal may include parameters relevant to application services of the user terminal.

Determination of the parameters using the AI makes it possible for each of the user terminal and the network to reduce signaling, feedback of information, and the like between the user terminal and the network. It is also possible for the user terminal to reduce power consumption. It is also possible for the user terminal to improve communication performance.

FIG. 2 is an explanatory view for explaining an example of classification of AI-based operations of the user terminal. The operations of the user terminal can be classified into four types of operations as illustrated in FIG. 2 in terms of AI functions. The user terminal does not operate using the AI in classifications 1 and 2 illustrated in FIG. 2. In classifications 3 and 4, the user terminal operates using AI.

Meanwhile, the NW side (for example, a radio base station or an information processing apparatus such as a server disposed in a core network (which may simply be referred to as "radio base station" in the following) judges whether or not signaling for the user terminal can be omitted. To this end, the user terminal notifies the radio base station of one or both of information on the presence or absence of the AI functions and information on the features of the AI, as the capability of the user terminal.

Further, when metrics for optimization are different between the user terminal and the radio base station, the user terminal may perform an improper operation or unexpected operation. Note that, the metrics are, for example, a criterion or range for optimizing the operation of the user terminal, and includes minimization of power consumption, and, maximization of connection insurability during high-speed movement and maximization of position estimation accuracy of the user terminal. The metrics may be called "rules."

Further, the user terminal also learns, for example, a semi-static configuration of the radio base station to optimize the operation. When the radio base station changes the configuration, the user terminal may experience problems (e.g., handover failure, radio link failure, or the like) during when the AI is being adapted to the configuration changed by the radio base station.

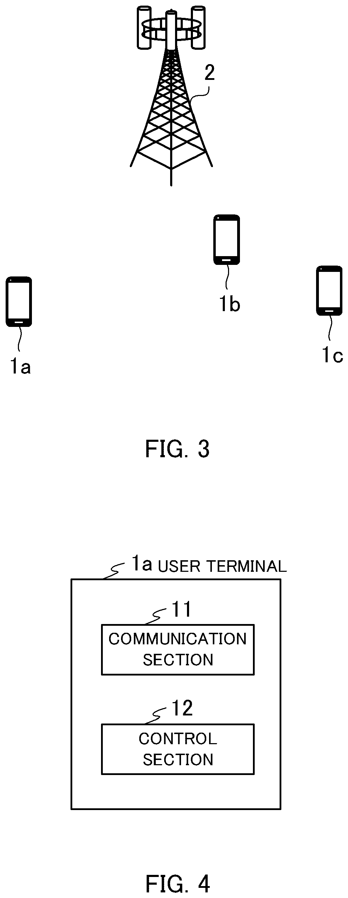

FIG. 3 illustrates an exemplary configuration of a radio communication system according to an embodiment. As illustrated in FIG. 3, the radio communication system includes user terminals 1a, 1b, and 1c and radio base station 2.

User terminal 1a is equipped with AI. User terminal 1a uses, for example, the AI to determine parameters relevant to radio communication. User terminal 1a controls the radio communication with radio base station 2 using the determined parameters. Note that determining the parameters by the user terminal using the AI may be understood as autonomously determining the parameters by the user terminal. The term "autonomously" may be replaced with other terms such as "at its own discretion," "freely," and "independently," for example.

User terminal 1a receives, from radio base station 2, information indicating whether or not determination of the parameters relevant to the radio communication is permitted. User terminal 1a may determine the parameters using the AI, for example, when having received the information indicating that (autonomous) determination of the parameters using the AI is permitted. On the other hand, user terminal 1a may operate according to parameters notified by radio base station 2 when the user terminal does not receive, from radio base station 2, the information indicating that the (autonomous) determination of the parameters using the AI is permitted, or when the user terminal receives information indicating that the (autonomous) determination of the parameters using the AI is not permitted. The information indicating whether or not the determination of the parameters relevant to the radio communication is permitted may be generated by, for example, radio base station 2, or may be generated by an information processing apparatus such as a server disposed in a core network.

Like user terminal 1a, user terminal 1b is equipped with AI. When having received, from radio base station 2, the information indicating that the determination of the parameters relevant to the radio communication is permitted, user terminal 1b autonomously determines the parameters using the AI. On the other hand, when having received, from radio base station 2, the information indicating that the determination of the parameters is not permitted, user terminal 1b operates based on the parameters notified by radio base station 2.

User terminal 1c is not equipped with AI. User terminal 1c operates based on parameters notified by radio base station 2.

Radio base station 2 forms a cell that is an area in which radio communication is possible. Radio base station 2 is connected to the core network (not illustrated). Radio base station 2 may be comprised of, for example, an Integrated Access and Backhaul (IAB) node.

FIG. 4 illustrates an example of a block configuration of user terminal 1a. As illustrated in FIG. 4, user terminal 1a includes communication section 11 and control section 12.

Communication section 11 performs radio communication with radio base station 2. Communication section 11 receives, from radio base station 2, the information indicating whether or not the determination of the parameters relevant to the radio communication is permitted. In addition, communication section 11 transmits, to radio base station 2, information indicating whether or not the autonomous determination of the parameters is possible, or information on parameters autonomously determinable by user terminal 1a.

Control section 12 controls, for example, the entire operation of user terminal 1a. Control section 12 has AI functions. Control section 12 controls the determination of the parameters using the AI based on the information received by communication section 11.

For example, communication section 11 receives, from radio base station 2, the information indicating that the determination of the parameters relevant to the radio communication is permitted. In this case, control section 12 determines the parameters using the AI. Control section 12 controls, for example, the radio communication of user terminal 1a using the determined parameters.

On the other hand, communication section 11 receives, from radio base station 2, the information indicating that the determination of the parameters relevant to the radio communication is not permitted. In this case, control section 12 controls the radio communication of user terminal 1a using the parameters notified by radio base station 2.

A storage section (not illustrated) stores a program for operating control section 12. The storage section also stores data used by control section 12 to perform calculation processing. The storage section also stores data samples learned by the AI of control section 12. The data samples may be collected by user terminal 1a. The data samples may also be collected by radio base station 2 and transmitted to user terminal 1a.

The example of the block configuration of user terminal 1a has been described above. User terminal 1b has a block configuration similar to that of FIG. 4.

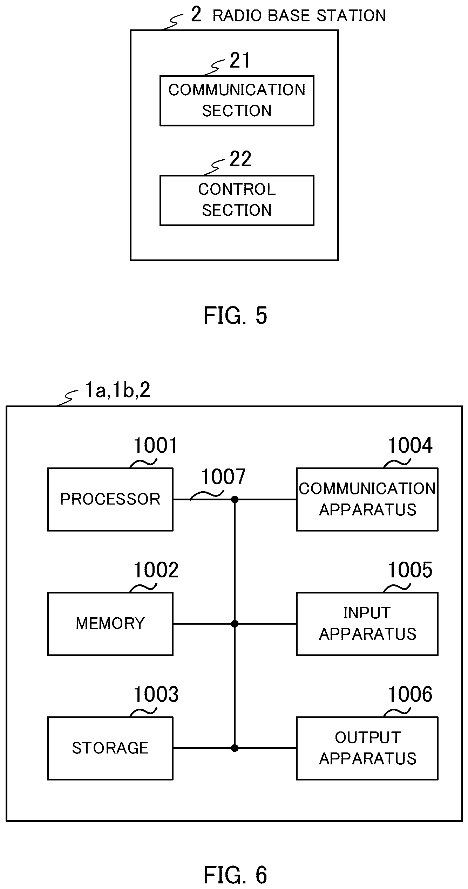

FIG. 5 illustrates an example of a block configuration of radio base station 2. As illustrated in FIG. 5, radio base station 2 includes communication section 21 and control section 22.

Communication section 21 performs radio communication with user terminals 1a, 1b, and 1c. Communication section 21 receives information on the capabilities of user terminals 1a, 1b, and 1c from user terminals 1a, 1b, and 1c.

Control section 22 controls, for example, the entire operation of radio base station 2. Control section 22 transmits, to user terminals 1a and 1b via communication section 21, the information indicating whether or not the determination of the parameters relevant to the radio communication is permitted. In addition, when having transmitted, via communication section 21, the information indicating that the determination of the parameters by user terminals 1a and 1b is not permitted, control section 22 transmits the parameters via communication section 21 to user terminals 1a and 1b. Control section 22 also transmits, to user terminals 1a and 1b via communication section 21, the information indicating a permissible range of autonomous determination of parameters.

### <Example of AI Operation>

Control section 12 may use the AI to determine parameters relevant to quality measurement for neighboring cells for mobility. Examples of the parameters relevant to the quality measurement for the neighboring cells for mobility include the measurement accuracy or the measurement cycle of the quality measurement for the neighboring cells. The quality of the cells may include, for example, Signal to Interference plus Noise Ratio (SINR), Reference Signal Received Power (RSRP), Reference Signal Received Quality (RSRQ), or the like.

The storage section of user terminal 1a may store, for example, information (data samples) such as the moving speeds of user terminal 1a at various locations, the measurement accuracy of the quality measurement for each neighboring cell, the measurement cycle, information on whether or not the connection to the neighboring cell has been successful, the power consumption, and the like. Control section 12 learns the information stored in the storage section, and autonomously determines parameters of the optimum measurement accuracy and measurement cycle based on the current moving speed and location of user terminal 1a.

For example, when the moving speed of user terminal 1a is slow and user terminal 1a is located near radio base station 2, it is considered to be unlikely for user terminal 1a to move from a serving cell (cell of radio base station 2) to a neighboring cell. Accordingly, control section 12 (AI) may determine, for example, parameters for a lower measurement accuracy of the quality measurement for the neighboring cell. Alternatively, control section 12 may determine, for example, parameters for a longer measurement cycle of the quality measurement for the neighboring cell.

On the other hand, for example, when the moving speed of user terminal 1a is high and/or when the user terminal is located at the cell end of the serving cell, it is considered to be likely for user terminal 1a to move from the serving cell to a neighboring cell. Accordingly, control section 12 (AI) may, for example, increase the measurement accuracy of the quality measurement for the neighboring cell, and determine parameters for a shorter measurement cycle of the quality measurement for the neighboring cell.

Through the above processing, it is possible to expect an increase in the mobility performance such as connection maintainability, for example, for user terminal 1a. In addition, radio base station 2 does not have to transmit the parameters of the measurement accuracy and the measurement cycle of the quality measurement for the neighboring cell to user terminal 1a, so as to be capable of reducing signaling between user terminal 1a and radio base station 2.

### <Notification of Information on AI Function of User Terminal to Radio Base Station 2>

User terminals 1a and 1b equipped with the AI may notify radio base station 2 of the presence or absence of the AI functions and/or the features of the AI as the capabilities of user terminals 1a and 1b. The features of the AI may be, for example, the type of parameters determined by the AI, a functional range (to be described later), metrics, and the like. The features of the AI may include, for example, properties of the AI or attributes of the AI.

For example, as the capabilities, user terminals 1a and 1b may notify radio base station 2 of whether or not parameters or a condition relevant to the operation of one or both of the RRM and the RLM can be changed and/or created based on the data samples.

Note that, the condition is a determination criterion used for judging whether or not user terminals 1a and 1b perform a certain operation, and is, for example, a threshold or the like. For example, when the quality of the serving cell falls below the threshold, user terminal 1a or 1b reports a result of the quality measurement for the neighboring cell to radio base station 2. The condition is the threshold that triggers reporting of the result of the quality measurement for the neighboring cell. In the present case, the condition may be understood as a part of the parameters.

Further, for example, user terminals 1a and 1b may notify radio base station 2 of both or one of information on a target operation for optimization and information on optimizable metrics. For example, as the optimizable metrics, user terminals 1a and 1b may notify radio base station 2 of at least one piece of information among the minimization of power consumption, connection insurability during high-speed movement, and maximization of position estimation accuracy.

### <Collection of Data Samples>

Data samples relevant to learning by AI may be provided by radio base station 2 for user terminals 1a and 1b. The data samples for learning by AI may be, for example, data samples relevant to one or both of the RRM and RLM.

For example, control section 12 may perform learning and/or optimization using not only (internal) data samples in user terminal 1a but also (external) data samples of another user terminal 1b provided by radio base station 2. The data samples provided by radio base station 2 may be data samples of a user terminal belonging to a cell of a radio base station different from radio base station 2.

The network may provide the data samples to user terminals 1a and 1b using C-Plane such as a broadcast channel, Radio Resource Control (RRC), or the like, for example. The network may also provide the data samples to user terminals 1a and 1b using U-Plane.

### <Indication Relevant to Permission of Parameter Determination by AI>

Radio base station 2 may explicitly or implicitly indicate to user terminals 1a and 1b whether optimization (parameter optimization) of the operation performed using the AI functions is on or off. For example, radio base station 2 may use RRC, MAC Control Element (MAC CE), or Downlink Control information (DCI) to explicitly transmit, to user terminals 1a and 1b, the information indicating whether or not autonomous parameter determination is permitted. Based on the information transmitted using the RRC, MAC CE, or DCI, user terminals 1a and 1b may switch on or off the optimization of the operation performed using the AI functions. The optimization of the operation using the AI functions may be, for example, optimization of the parameters relevant to one or both of the RRM and RLM.

Radio base station 2 may explicitly indicate to user terminals 1a and 1b that, for example, the determination of parameters of a specific parameter group is "left to UE." For example, radio base station 2 may use the RRC, MAC CE, or DCI to transmit, to user terminals 1a and 1b, the information indicating that the determination of the parameters of a specific parameter group is permitted, so as to explicitly indicate to user terminals 1a and 1b that the parameter determination is "left to UE."

Further, for example, when no value is configured for parameters of a specific parameter group, user terminals 1a and 1b may judge that the "left to UE" configuration is configured implicitly. For example, user terminals 1a and 1b may autonomously determine the parameters of the specific parameter group whose values are not configured by radio base station 2.

Radio base station 2 may dynamically and switchably determine, for example, using the MAC CE or DCI, whether or not the determination of the parameters is "left to UE." For example, radio base station 2 may dynamically switch the autonomous parameter determination of user terminals 1a and 1b from the determination that is "left to UE" to the determination that is not "left to UE" in a disaster or emergency. This processing allows user terminals 1a and 1b to operate according to the parameters indicated by radio base station 2, and to prevent an inappropriate operation or an unexpected operation in a disaster, an emergency, or the like.

In addition, radio base station 2 may notify user terminals 1a and 1b of the determination criterion for determining whether or not the parameter determination is "left to UE." The determination criterion may be, for example, a threshold or a timer.

For example, user terminals 1a and 1b may judge that the parameter determination is "left to UE," when values of autonomously determined parameters are within a range of the threshold notified by radio base station 2. User terminals 1a and 1b having judged that the parameter determination is "left to UE" control the radio communication using, for example, the autonomously determined parameters. On the other hand, user terminals 1a and 1b may judge that the parameter determination is not "left to UE," when the values of the autonomously determined parameters are outside the threshold notified by radio base station 2. User terminals 1a and 1b having judged that the parameter determination is not "left to UE" control the radio communication using, for example, the parameters notified by radio base station 2.

Further, for example, when the parameters are not determined autonomously within the time period of the timer notified by radio base station 2, user terminals 1a and 1b may judge that the parameter determination is not "left to UE." User terminals 1a and 1b having judged that the parameter determination is not "left to UE" control the radio communication using, for example, the parameters notified by radio base station 2.

The processing of notifying user terminals 1a and 1b of the determination criteria by radio base station 2 allows user terminals 1a and 1b to prevent an inappropriate operation or an unexpected operation. Note that, for example, radio base station 2 may use the RRC to notify user terminals 1a and 1b of the determination criteria.

### <Range or the like of Autonomously Determined Parameters>

For some parameters, radio base station 2 may specify the "left to UE" configuration to user terminals 1a and 1b having the AI functions, and specify parameters to user terminal 1c not having the AI functions.

Radio base station 2 may specify a range of values of parameters determinable by user terminals 1a and 1b when configuring user terminals 1a and 1b with the "left to UE" configuration. The range of values of the parameters determinable by user terminals 1a and 1b may be pre-configured for user terminals 1a and 1b.

Further, radio base station 2 may indicate, to user terminals 1a and 1b, the parameters (condition) to be autonomously determined by user terminals 1a and 1b. In addition, the type of the condition to be autonomously determined by user terminals 1a and 1b may be pre-configured for the user terminal. Hereinafter, three condition examples will be described.

### <Example 1>

Radio base station 2 may indicate to user terminals 1a and 1b that parameters (condition) for an event trigger are autonomously determinable parameters. For example, user terminals 1a and 1b reports a result of quality measurement for a neighboring cell when the quality of the serving cell falls below a threshold (condition). Radio base station 2 may indicate to user terminals 1a and 1b that the threshold triggering reporting of the result of quality measurement for the neighboring cell is an autonomously determinable condition. User terminals 1a and 1b may autonomously determine the threshold triggering reporting of the result of quality measurement for the neighboring cell that is indicated by radio base station 2, and may judge, using the determined threshold, whether or not to report the result of quality measurement for the neighboring cell.

### <Example 2>

Radio base station 2 may indicate to user terminals 1a and 1b that parameters (condition) for Radio Link Failure (RLF) are autonomously determinable parameters. For example, user terminals 1a and 1b activate a timer for judging the RLF. Radio base station 2 may indicate to user terminals 1a and 1b that a timer value for judging the RLF is an autonomously determinable condition. User terminals 1a and 1b may autonomously determine the timer value for judging the RLF that is indicated by radio base station 2, and may judging the RLF using the determined timer value.

### <Example 3>

Radio base station 2 may indicate to user terminals 1a and 1b that parameters (condition) for random access are autonomously determinable parameters. For example, regarding transmission of a preamble for the random access, user terminals 1a and 1b transmit the preamble when the reception quality (e.g., RSRP) of a cell to which the preamble is transmitted is equal to or higher than a threshold. Radio base station 2 may indicate to user terminals 1a and 1b that the threshold for judging transmission of the preamble is an autonomously determinable condition. User terminals 1a and 1b may autonomously determine the threshold for judging the transmission of the preamble that is indicated by radio base station 2, and may judging the transmission of the preamble using the determined threshold.

In addition, for parameters relevant to broadcast information, radio base station 2 may notify user terminals 1a, 1b, and 1c of parameters different between, on the one hand, user terminals 1a and 1b equipped with the AI (which may be referred to as "AI-capable terminals") and, on the other hand, user terminal 1c not equipped with the AI (which may be referred to as "non-AI-capable terminal"). Further, for parameters relevant to configuration information common to cells, radio base station 2 may notify user terminals 1a, 1b, and 1c of parameters different between, on the one hand, user terminals 1a and 1b equipped with the AI and, on the other hand, user terminal 1c not equipped with the AI. By this processing, user terminal 1c is capable of operating according to the parameters notified by radio base station 2, for example, even when radio base station 2 permits user terminals 1a and 1b the autonomous determination of the parameters relevant to the broadcast information.

As described above, communication section 11 of user terminal 1a receives the information indicating whether or not the determination of parameters relevant to the radio communication is permitted. Control section 12 controls the determination of parameters used for the radio communication based on the information received by communication section 11. This processing allows user terminal 1a to improve the efficiency of communication operation by improving the efficiency of the determination of parameters for the radio communication.

Further, user terminals 1a and 1b autonomously determine the parameters, and are thus capable of reducing signaling between user terminals 1a and 1b and radio base station 2. In addition, even with a large number of parameters, user terminals 1a and 1b are capable of determining appropriate parameters through learning using the AI. User terminals 1a and 1b operate with the appropriate parameters and are thus also capable of improving communication quality. User terminals 1a and 1b reduce the signaling and are thus also capable of reducing power consumption.

When the metrics for optimization are different between user terminals 1a and 1b and radio base station 2, radio base station 2 transmits the information indicating that the autonomous determination of the parameters by user terminals 1a and 1b is not permitted. This processing allows user terminals 1a and 1b to operate using, for example, the parameters transmitted by radio base station 2, so as to prevent an inappropriate operation or an unexpected operation.

When having changed the configuration, radio base station 2 transmits the information that the autonomous determination of the parameters by user terminals 1a and 1b is not permitted. This processing allows user terminals 1a and 1b to operate using, for example, the parameters transmitted by radio base station 2, so as to prevent an inappropriate operation or an unexpected operation.

Further, in a disaster, emergency, or the like, radio base station 2 may not permit the autonomous determination of parameters performed by user terminals 1a and 1b. This processing allows user terminals 1a and 1b to operate according to the parameters indicated by radio base station 2, and to prevent an inappropriate operation or an unexpected operation in a disaster, an emergency, or the like.

Note that, user terminals 1a and 1b may autonomously determine parameters relevant to reception of downlink data including System Information Block (SIB) and the like. Further, user terminals 1a and 1b may autonomously determine parameters relevant to monitoring operation or the like for a search space of Physical Downlink Control Channel (PDCCH) that includes paging or the like.

Further, user terminals 1a and 1b may notify radio base station 2 of a functional range in which the parameters can be autonomously determined, as the capabilities of user terminals 1a and 1b. For example, when user terminal 1a is capable of autonomously determining the parameters relevant to the RRM, the parameters relevant to the reception of downlink data including the SIB and the like, and the parameters relevant to the monitoring operation for the search space, user terminal 1a may notify radio base station 2 of the information indicating that these parameters can be autonomously determined, as the capability of user terminal 1a. That is, user terminals 1a and 1b may notify radio base station 2 of the capabilities relevant to the functional ranges.

Further, for example, radio base station 2 may permit the autonomous determination of the parameters relevant to the RRM, the autonomous determination of the parameters relevant to the reception of downlink data including the SIB and the like, and the autonomous determination of the parameters relevant to the monitoring operation for the search space individually. In addition, radio base station 2 may permit the autonomous determination of the parameters relevant to the RRM, the autonomous determination of the parameters relevant to the reception of downlink data including the SIB and the like, and the autonomous determination of the parameters relevant to the monitoring operation for the search space collectively. That is, radio base station 2 may permit the autonomous determinations of the functional ranges of user terminals 1a and 1b individually or collectively.

User terminal 1a or 1b may also collect data samples of the other one of user terminals 1a and 1b using side-link communication.

The present disclosure is also applicable to an IAB node. For example, from the viewpoint of a certain IAB node (hereinafter referred to as a parent node), an IAB node (hereinafter referred to as a child node) that performs an operation corresponding to that of a user terminal may be equipped with AI. The child node may autonomously determine parameters relevant to the operation of the child node based on an indication from the parent node. The parent node may also be equipped with the AI.

The present disclosure has been described above.

### <Hardware Configuration and/or the like>

Note that, the block diagrams used to describe the above embodiment illustrate blocks on a function-by-function basis. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit," "transmission section," or "transmitter." The methods for implementing the functions are not limited specifically as described above.

For example, the base station, user terminal, and the like according to an embodiment of the present disclosure may function as a computer that executes processing of a radio communication method of the present disclosure. FIG. 6 illustrates an example of a hardware configuration of user terminals 1a and 1b and radio base station 2 according to an embodiment. Physically, user terminals 1a and 1b and radio base station 2 as described above may be a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configuration of user terminals 1a and 1b and radio base station 2 may include one apparatus or a plurality of apparatuses illustrated in the drawings or may not include part of the apparatuses.

The functions of user terminals 1a and 1b and radio base station 2 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 12 and/or the like as described above may be implemented by processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 12 of user terminal 1a, the control section of user terminal 1b, and control section 22 of radio base station 2 may be implemented using a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, communication section 11 of user terminal 1a, the communication section of user terminal 1b, and communication section 21 of radio base station 2 may be implemented using communication apparatus 1004. Communication section 11 may be implemented using a transmission section and a reception section physically or logically separated from each other.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, user terminals 1a and 1b and radio base station 2 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### <Notification and Signaling of Information>

The notification of information is not limited to the aspects or embodiments described in the present disclosure, and the information may be notified by another method. For example, the notification of information may be carried out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

### <Applied System>

The aspects and embodiments described in the present specification may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### <Processing Procedure and the like>

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### <Operation of Base Station>

Specific operations which are described in the present disclosure as being performed by the base station may sometimes be performed by an upper node depending on the situation. Various operations performed for communication with a terminal in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### <Direction of Input and Output>

The information or the like (see the item of "Information and Signals") can be output from a higher layer (or a lower layer) to a lower layer (or a higher layer). The information, the signals, and the like may be input and output through a plurality of network nodes.

### <Handling of Input and Output Information and the like>

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variations and the like of Aspects>

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### <Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

### <Information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### <"System" and "Network">

The terms "system" and "network" used in the present disclosure can be interchangeably used.

### <Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### <Base Station>

The terms "Base Station (BS)," "radio base station," "fixed station," "NodeB," "eNodeB (eNB)," "gNodeB (gNB)," "access point," "transmission point," "reception point, "transmission/reception point," "cell," "sector," "cell group," "carrier," and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### <Mobile Station>

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### <Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user terminal. For example, the aspects and the embodiments of the present disclosure may find application in a configuration that results from replacing communication between the base station and the user terminal with communication between multiple user terminals (such communication may, e.g., be referred to as device-to-device (D2D), vehicle-to-everything (V2X), or the like). In this case, the user equipment may be configured to have the functions that the base station described above has. The wordings "uplink" and "downlink" may be replaced with a corresponding wording for inter-equipment communication (for example, "side"). For example, an uplink channel, a downlink channel, and the like may be replaced with a side channel.

Similarly, the user terminal in the present disclosure may be replaced with the base station. In this case, the base station may be configured to have the functions that the user equipment described above has.

### <Meaning and Interpretation of Terms>

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

### <Reference Signal>

The reference signal can also be abbreviated as an RS and may also be called as a pilot depending on the applied standard.

### <Meaning of "based on">

The description "based on" used in the present disclosure does not mean "based only on," unless otherwise specified. In other words, the description "based on" means both of "based only on" and "based at least on."

### <Terms "first" and "second">

Any reference to elements by using the terms "first," "second," and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### <"Means">

The "means" in the configuration of each apparatus described above may be replaced with "section," "circuit," "device," or the like.

### <Open-ended Format>

In a case where terms "include," "including," and their modifications are used in the present disclosure, these terms are intended to be inclusive like the term "comprising." Further, the term "or" used in the present disclosure is not intended to be an exclusive or.

### <Time Units such as a TTI, Frequency Units such as an RB, and a Radio Frame Configuration>

The radio frame may be constituted by one frame or a plurality of frames in the time domain. The one frame or each of the plurality of frames may be called a subframe in the time domain.

The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user terminal) on a TTI-by-TTI basis to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

### <Maximum Transmit Power>

The "maximum transmit power" described in the present disclosure may mean a maximum value of the transmit power, the nominal UE maximum transmit power, or the rated UE maximum transmit power.

### <Article>

In a case where articles, such as "a," "an," and "the" in English, for example, are added in the present disclosure by translation, nouns following these articles may have the same meaning as used in the plural.

### <"Different">

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### Industrial Applicability

One aspect of the present disclosure is useful for radio communication systems.

### Reference Signs List

1a, 1b, 1c User terminal
2 Radio base station
11, 21 Communication section
12, 22 Control section

## Claims

1. A user terminal, comprising:
a reception section that receives information indicating whether or not determination of a parameter relevant to radio communication is permitted; and
a control section that controls, based on the information, determination of a parameter used for the radio communication.

2. The user terminal according to claim 1, further comprising:
a transmission section that transmits information indicating whether or not autonomous determination of the parameter is possible, or information on a parameter autonomously determinable by the user terminal.

3. The user terminal according to claim 1 or 2, wherein
the control section controls the determination of the parameter by learning a data sample relevant to the radio communication.

4. The user terminal according to any one of claims 1 to 3, wherein
the control section controls the radio communication in accordance with parameter configuration by a base station when the information indicates that the determination of the parameter is not permitted.

5. The user terminal according to claim 2, wherein
the reception section receives information indicating a permissible range of the autonomous determination, and
the control section controls the autonomous determination of the parameter within the permissible range.

6. A communication control method, comprising:
receiving information indicating whether or not determination of a parameter relevant to radio communication is permitted; and
controlling, based on the information, determination of a parameter used for the radio communication.
